# EUROPEAN PATENT APPLICATION

(11) **EP 3 112 149 A1**
(43) Date of publication of application: **04.01.2017**
(21) Application number: 15382348.9
(22) Date of filing: 30.06.2015
(51) Int. Cl.: B32B 27/08, B32B 27/32, B32B 9/02, C08L 23/08

(54) **MULTILAYER FILMS INCORPORATING STARCH AND ARTICLES COMPRISING THE SAME**

(71) Applicant: Dow Global Technologies LLC, Midland, MI 48674 (US)
(72) Inventor: PARKINSON, Shaun, Tarragona (ES); AMICI, Marco, 8820 Waedenswil (CH)
(74) Representative: Elzaburu S.L.P.

(57) **Abstract**

The present invention provides multilayer films comprising thermoplastic starch and articles formed therefrom. In one embodiment, a multilayer film comprises (a) a first layer comprising from 50 to 100 percent by weight of a linear low density polyethylene having a density less than 0.930 g/cm³ and a melt index (I₂) of 2 g/10 minutes or less, (b) a second layer comprising from 50 to 100 percent by weight of a linear low density polyethylene having a density less than 0.930 g/cm³ and a melt index (I₂) of 2 g/10 minutes or less, and (c) a third layer positioned between the first and second layer, wherein the third layer comprises at least 10 percent by weight of a thermoplastic starch and up to 90 percent by weight of a linear low density polyethylene having a density less than 0.920 g/cm³ and a melt index (I₂) of 2 g/10 minutes or less, wherein the thickness of the third layer comprises at least 30% percent of the thickness of the multilayer film.

## Description

### Field

The present invention relates to multilayer films incorporating starch and, in some aspects, multilayer polyethylene films having relatively high starch contents. Such films can be particularly useful in articles such as food packages.

### Background

Films for food, industrial and specialty packaging are under pressure to reduce their impact on the environment due to their origin based on oil derivatives such as ethylene. There is a growing interest in using films for packaging that contains components that are renewable or that are based on materials that are not derived from fossil fuels (hereinafter "environmentally friendly materials"). Usually these environmentally friendly materials undergo deterioration in film performance over time which makes them unsuitable for packaging applications. In addition, their mechanical performance is generally poor when compared with other films, which necessitates an increase in film thickness thereby potentially offsetting any improvement in sustainability. In order to overcome these drawbacks, polymers such as polyethylenes are often added to the environmentally friendly materials.

Films containing polyolefins and starch (an environmentally friendly material) are useful in a variety of different applications. Common applications for such films are packaging, containers, separators, dividers, or the like.

One challenge in incorporating starch in polyethylene films is a drop in performance when relatively high contents of starch are used due in part to compatibility issues between the starch and polyethylene. Previous attempts to address this problem have involved, for example, the inclusion of ethylene acrylic acid in the film structure.

It would be desirable to have polyethylene films that incorporate relatively high amounts of starch without a significant deterioration in performance.

### Summary

The present invention provides multilayer films that advantageously incorporate relatively high amounts of starch (e.g., at least 10 weight percent) while still providing desirable properties. The present invention combines several film layers comprising various polyethylenes in a manner that compensates for the loss of certain mechanical properties despite the inclusion of starch. The present invention, in some embodiments, advantageously does so while avoiding the inclusion of ethylene acrylic acid in one or more of the film layers. In some embodiments, multilayer film structure of the present invention can advantageously be made on standard blown film equipment and can exhibit mechanical performance suitable for use in food packaging, such as frozen food packaging.

In one aspect, the present invention provides a multilayer film that comprises (a) a first layer comprising from 50 to 100 percent by weight of a linear low density polyethylene having a density less than 0.930 g/cm³ and a melt index (I₂) of 2 g/10 minutes or less; (b) a second layer comprising from 50 to 100 percent by weight of a linear low density polyethylene having a density less than 0.930 g/cm³ and a melt index (I₂) of 2 g/10 minutes or less; and (c) a third layer positioned between the first and second layer, wherein the third layer comprises at least 10 percent by weight of a thermoplastic starch and up to 90 percent by weight of a linear low density polyethylene having a density less than 0.920 g/cm³ and a melt index (I₂) of 2 g/10 minutes or less, wherein the thickness of the third layer comprises at least 30% percent of the thickness of the multilayer film.

Embodiments of the present invention also provide articles (e.g., food packages, frozen food packages, etc.) formed from the multilayer films disclosed herein.

These and other embodiments are described in more detail in the Detailed Description.

### Detailed Description

Unless specified otherwise herein, percentages are weight percentages (wt%) and temperatures are in °C.

The term "composition," as used herein, includes material(s) which comprise the composition, as well as reaction products and decomposition products formed from the materials of the composition.

The term "comprising," and derivatives thereof, is not intended to exclude the presence of any additional component, step or procedure, whether or not the same is disclosed herein. In order to avoid any doubt, all compositions claimed herein through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

The term "polymer," as used herein, refers to a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure), and the term interpolymer as defined hereinafter. Trace amounts of impurities may be incorporated into and/or within the polymer.

The term "interpolymer," as used herein, refers to a polymer prepared by the polymerization of at least two different types of monomers. The generic term interpolymer thus includes copolymers (employed to refer to polymers prepared from two different types of monomers), and polymers prepared from more than two different types of monomers. The term "polymer", as used herein, refers to a polymeric compound prepared by polymerizing monomers, whether of the same or a different type. The generic term polymer thus embraces the term "homopolymer", usually employed to refer to polymers prepared from only one type of monomer as well as "copolymer" which refers to polymers prepared from two or more different monomers.

"Polyethylene" shall mean polymers comprising greater than 50% by weight of units which have been derived from ethylene monomer. This includes polyethylene homopolymers or copolymers (meaning units derived from two or more comonomers). Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); single site catalyzed Linear Low Density Polyethylene, including both linear and substantially linear low density resins (m-LLDPE); Medium Density Polyethylene (MDPE); and High Density Polyethylene (HDPE). These polyethylene materials are generally known in the art; however the following descriptions may be helpful in understanding the differences between some of these different polyethylene resins.

The term "LDPE" may also be referred to as "high pressure ethylene polymer" or "highly branched polyethylene" and is defined to mean that the polymer is partly or entirely homopolymerized or copolymerized in autoclave or tubular reactors at pressures above 14,500 psi (100 MPa) with the use of free-radical initiators, such as peroxides (see for example US 4,599,392, which is hereby incorporated by reference). LDPE resins typically have a density in the range of 0.916 to 0.940 g/cm³.

The term "LLDPE", includes both resin made using the traditional Ziegler-Natta catalyst systems as well as single-site catalysts, such as metallocene catalysts (sometimes referred to as "m-LLDPE") and constrained geometry catalysts, and includes linear, substantially linear or heterogeneous polyethylene copolymers or homopolymers. LLDPEs contain less long chain branching than LDPEs and includes the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,854,045). The LLDPEs can be made via gas-phase, solution-phase or slurry polymerization or any combination thereof, using any type of reactor or reactor configuration known in the art, with gas and slurry phase reactors being most preferred.

The term "MDPE" refers to polyethylenes having densities from 0.926 to 0.940 g/cm³. "MDPE" is typically made using chromium or Ziegler-Natta catalysts or using single site catalysts such as metallocene catalysts and constrained geometry catalysts, or single site catalysts, and typically have a molecular weight distribution ("MWD") greater than 2.5.

The term "HDPE" refers to polyethylenes having densities greater than about 0.940 g/cm³, which are generally prepared with Ziegler-Natta catalysts, chrome catalysts or single site catalysts such as metallocene catalysts and constrained geometry catalysts.

The term "ULDPE" refers to linear low density polyethylenes having densities of 0.880 to 0.912 g/cm³, which are generally prepared with Ziegler-Natta catalysts, chrome catalysts, or single site catalysts such as metallocene catalysts and constrained geometry catalysts.

Unless otherwise indicated herein, the following analytical methods are used in the describing aspects of the present invention:
Melt index: Melt indices I₂ (or I₂) and I₁₀ (or I₁₀) are measured in accordance to ASTM D-1238 at 190° C and at 2.16 kg and 10 kg load, respectively. Their values are reported in g/10 min.
Density: Samples for density measurement are prepared according to ASTM D4703. Measurements are made, according to ASTM D792, Method B, within one hour of sample pressing.

Peak melting point is determined by Differential Scanning Calorimeter (DSC) where the film is conditioned at 230° C for 3 minutes prior to cooling at a rate of 10° C per minute to a temperature of -40° C. After the film is kept at -40° C for 3 minutes, the film is heated to 200° C at a rate of 10° C per minute.

The term molecular weight distribution or "MWD" is defined as the ratio of weight average molecular weight to number average molecular weight (Mw/Mn). Mw and Mn are determined according to methods known in the art using conventional gel permeation chromatography (conventional GPC).

Dart impact strength is measured according to ASTM D882. Normalized dart impact strength is determined by dividing the dart impact strength (measured according to ASTM D882) by the thickness of the film.

Elmendorf tear strength is measured according to ASTM D1922.

Elongation to break is measured according to ASTM 527-3.

Additional properties and test methods are described further herein.

The present invention relates generally to multilayer films including relatively high amounts of starch as well as to various articles (e.g., packages) incorporating such films.

In one aspect, a multilayer film comprises (a) a first layer comprising from 50 to 100 percent by weight of a linear low density polyethylene having a density less than 0.930 g/cm³ and a melt index (I₂) of 2 g/10 minutes or less; (b) a second layer comprising from 50 to 100 percent by weight of a linear low density polyethylene having a density less than 0.930 g/ cm³ and a melt index (I₂) of 2 g/10 minutes or less; and (c) a third layer positioned between the first and second layer, wherein the third layer comprises at least 10 percent by weight of a thermoplastic starch and up to 90 percent by weight of a linear low density polyethylene having a density less than 0.920 g/ cm³ and a melt index (I₂) of 2 g/10 minutes or less, wherein the thickness of the third layer comprises at least 30% percent of the thickness of the multilayer film. In some embodiments, the total thermoplastic starch content of the film is at least 15 percent by weight based on the total weight of the multilayer film. The total thermoplastic starch content of the film is at least 20 percent by weight based on the total weight of the multilayer film in some embodiments. The total thermoplastic starch content of the film, in some embodiments, is 30 percent by weight or less based on the total weight of the multilayer film.

In some embodiments, the thickness of the third layer of the multilayer film comprises at least 50 percent of the thickness of the multilayer film. The thickness of the third layer comprises at least 70 percent of the thickness of the multilayer film in some embodiments. In some embodiments, the third layer of the multilayer film is at least twice as thick as the first layer and the second layer.

In some embodiments, the first layer and/or the second layer do not contain thermoplastic starch.

In some embodiments, a multilayer film of the present invention does not contain ethylene acrylic acid.

The first layer and/or the second layer, in various embodiments, may further comprise a low density polyethylene. In some embodiments, the first layer and/or second layer of the multilayer film comprises 50 weight percent or less of the low density polyethylene based on the weight of the layer. In some embodiments, the first layer of the multilayer film comprises 15 weight percent or less of the low density polyethylene based on the weight of the first layer. The second layer of the multilayer film, in some embodiments, comprises 15 weight percent or less of the low density polyethylene based on the weight of the second layer.

Multilayer films of the present invention can have one or more desirable properties as set forth herein. In some embodiments, a multilayer film of the present invention exhibits a normalized dart impact strength of at least 5 grams/micron when dart impact strength is measured as per ASTM D882. In some embodiments, a multilayer film exhibits a machine direction Elmendorf tear strength of at least 400 grams when measured as per ASTM D1922, and cross-machine direction Elmendorf tear strength of at least 1,000 grams when measured as per ASTM D1922. A multilayer film, in some embodiments, exhibits an elongation to break of 400 to 500% when measured as per ASTM 527-3.

Embodiments of the present invention also provide articles formed from any of the multilayer films described herein. Examples of such articles can include flexible packages, pouches, stand-up pouches, and pre-made packages or pouches. In some embodiments, multilayer films of the present invention can be used food packages.

While the inclusion of starch in film layers, particularly in relatively high amounts, can have a negative impact on mechanical properties, embodiments of the present invention utilize a film structure that can advantageously compensate for the potential loss of certain properties due to the presence of starch.

Multilayer films according to some embodiments of the present invention comprise at least three layers, with an inner layer comprising at least 10% by weight of a thermoplastic starch being positioned between first and second layers. The first and/or second layers may or may not be outer layers of a film or an article incorporating the film. For example, the multilayer films may be combined with other layers (e.g., barrier layers, sealant layers, tie layers, etc.) to form an article. While the multilayer films may be combined with other layers using one or more tie layers, embodiments of the present invention can comprise first and second layers that are coextruded with the starch-containing layer without the presence of a tie layer. The first layer and the second layer preferably comprise polyethylene without any starch.

In such embodiments, a first layer comprises from 50 to 100 percent by weight of a linear low density polyethylene. The first layer is a surface layer in some embodiments. All individual values and subranges from 50 to 100 percent by weight (wt%) are included herein and disclosed herein; for example the amount of the linear low density polyethylene can be from a lower limit of 50, 60, 70, 80, or 90 wt% to an upper limit of 60, 70, 80, 90, or 100 wt%. For example, the amount of the first linear low density polyethylene can be from 60 to 100 wt%, or in the alternative, from 70 to 100 wt%, or in the alternative, from 75 to 95 wt%, or in the alternative from 80 to 95 wt%.

The linear low density polyethylene in the first layer can be a metallocene catalyzed linear low density polyethylene, a constrained geometry catalyst (CGC) catalyzed linear low density polyethylene, or other single site catalyzed linear low density polyethylene, or an ultra low density polyethylene (ULDPE), in some embodiments.

The linear low density polyethylene has a density less than 0.930 g/cc (cm³). All individual values and subranges less than 0.930 g/cc are included herein and disclosed herein; for example, the density of the linear low density polyethylene can be up to an upper limit of 0.928, 0.925, 0.920 or 0.915 g/cc In some aspects of the invention, the linear low density polyethylene has a density greater than or equal to 0.870 g/cc. All individual values and subranges between 0.870 and 0.930 g/cc are included herein and disclosed herein.

The melt index of the linear low density polyethylene in the first layer can depend on a number of factors including whether the film is a blown film or a cast film. In embodiments where the film is a blown film, the linear low density polyethylene has an I₂ less than or equal to 2.0 g/10 minutes. All individual values and subranges from 2.0 g/10 minutes are included herein and disclosed herein. For example, the linear low density polyethylene can have a melt index from an upper limit of 2.0, 1.7, 1.4, 1.1, or 0.9 g/10 minutes. In a particular aspect of the invention, the linear low density polyethylene has an I₂ with a lower limit of 0.1 g/10 minutes. All individual values and subranges from 0.1 g/10 minutes are included herein and disclosed herein. For example, the linear low density polyethylene can have an I₂ greater than or equal to 0.1, 0.2, 0.3, or 0.4 g/10 minutes.

Examples of linear low density polyethylenes that can be used in the first layer include those commercially available from The Dow Chemical Company under the names ELITE™, DOWLEX™, ATTANE™ and AFFINITY™ including, for example, ELITE™ 5400G, DOWLEX™5056G and, and from ExxonMobil Chemical Company under the names Exceed and Enable.

In embodiments where the first layer comprises <100% of the linear low density polyethylene, the first layer further comprises one or more additional polyethylene resins such as, for example, one or more low density polyethylenes. In such embodiments, the first layer can comprise up to 50 percent by weight of a low density polyethylene, preferably 15 weight percent or less. All individual values and subranges from 5 to 50 percent by weight (wt%) are included herein and disclosed herein; for example the amount of the high density polyethylene can be from a lower limit of 0, 5, or 10 wt% to an upper limit of 15, 20, 25, 30, 35, 40, or 45 wt%. For example, the amount of the low density polyethylene can be from 1 to 20 wt%, or in the alternative, from 1 to 15 wt%, or in the alternative, from 5 to 15 wt%, or in the alternative from 5 to 12 wt%.

The low density polyethylene has a density of 0.916 g/cc (cm³) to 0.940 g/cc. All individual values and subranges from 0.916 to 0.940 g/cc are included herein and disclosed herein; for example, the density of the polyethylene can be from a lower limit of 0.916, 0.918, 0.920, 0.922, 0.925, 0.928, or 0.930 g/cc to an upper limit of 0.930, 0.932, 0.934, 0.936, 0.938, or 0.940 g/cc.

The melt index of the low density polyethylene in the first layer can depend on a number of factors including whether the film is a blown film or a cast film. In embodiments where the film is a blown film, the low density polyethylene has an I₂ less than or equal to 2.0 g/10 minutes. All individual values and subranges from 2.0 g/10 minutes are included herein and disclosed herein. For example, the low density polyethylene can have a density from an upper limit of 2.0, 1.7, 1.4, 1.1, or 0.9 g/10 minutes. In a particular aspect of the invention, the low density polyethylene has an I₂ with a lower limit of 0.1 g/10 minutes. All individual values and subranges from 0.1 g/10 minutes are included herein and disclosed herein. For example, the low density polyethylene can have an I₂ greater than or equal to 0.1, 0.2, 0.3, or 0.4 g/10 minutes.

Examples of low density polyethylenes that can be used in the first layer include those commercially available from The Dow Chemical Company such as LDPE 320E, and from LyondellBasell, ExxonMobil Chemical Company, and Borealis AG.

In some embodiments, the first layer can comprise other polyethylenes. The first layer, in some embodiments, comprises only the linear low density polyethylene or the combination of linear low density polyethylene and low density ethylene, as described above. The first layer, in some embodiments, does not include thermoplastic starch. In some embodiments, the first layer does not include ethylene acrylic acid. In some embodiments, the first layer comprises at least 95 percent by weight polyethylene or in the alternative, at least 96 percent by weight polyethylene, or in the alternative, at least 97 percent by weight polyethylene, or in the alternative at least 98 percent by weight polyethylene or in the alternative at least 99 percent by weight polyethylene.

Turning now to the second layer, the second layer, in some embodiments, can have the same composition as the first layer. In other embodiments, the second layer has a different composition from the first layer.

In some embodiments, a second layer comprises from 50 to 100 percent by weight of a linear low density polyethylene. The second layer is a surface layer in some embodiments. In some embodiments, such as where the multilayer film comprises more than three layers, the second layer is an inner layer. All individual values and subranges from 50 to 100 percent by weight (wt%) are included herein and disclosed herein; for example the amount of the linear low density polyethylene can be from a lower limit of 50, 60, 70, 80, or 90 wt% to an upper limit of 60, 70, 80, 90, or 100 wt%. For example, the amount of the first linear low density polyethylene can be from 60 to 100 wt%, or in the alternative, from 70 to 100 wt%, or in the alternative, from 75 to 95 wt%, or in the alternative from 80 to 95 wt%.

The linear low density polyethylene in the second layer can be a metallocene catalyzed linear low density polyethylene, a constrained geometry catalyst (CGC) catalyzed linear low density polyethylene, or other single site catalyzed linear low density polyethylene, or an ultra low density polyethylene (ULDPE), in some embodiments.

The linear low density polyethylene has a density less than 0.930 g/cc (cm³). All individual values and subranges less than 0.930 g/cc are included herein and disclosed herein; for example, the density of the linear low density polyethylene can be up to an upper limit of 0.928, 0.925, 0.920 or 0.915 g/cc In some aspects of the invention, the linear low density polyethylene has a density greater than or equal to 0.870 g/cc. All individual values and subranges between 0.870 and 0.930 g/cc are included herein and disclosed herein.

The melt index of the linear low density polyethylene in the second layer can depend on a number of factors including whether the film is a blown film or a cast film. In embodiments where the film is a blown film, the linear low density polyethylene has an I₂ less than or equal to 2.0 g/10 minutes. All individual values and subranges from 2.0 g/10 minutes are included herein and disclosed herein. For example, the first low density polyethylene can have a melt index from an upper limit of 2.0, 1.7, 1.4, 1.1, or 0.9 g/10 minutes. In a particular aspect of the invention, the linear low density polyethylene has an I₂ with a lower limit of 0.1 g/10 minutes. All individual values and subranges from 0. 1 g/10 minutes are included herein and disclosed herein. For example, the first low density polyethylene can have an I₂ greater than or equal to 0.1, 0.2, 0.3, or 0.4 g/10 minutes.

Examples of linear low density polyethylenes that can be used in the second layer include those commercially available from The Dow Chemical Company under the names ELITE™, DOWLEX™, and AFFINITY™ including, for example, ELITE™ 5400G, and, and from ExxonMobil Chemical Company under the names Exceed and Enable.

In embodiments where the second layer comprises <100% of the linear low density polyethylene, the second layer further comprises one or more additional polyethylene resins such as, for example, one or more low density polyethylenes. In such embodiments, the second layer can comprise up to 50 percent by weight of a low density polyethylene, preferably 15 weight percent or less. All individual values and subranges from 5 to 50 percent by weight (wt%) are included herein and disclosed herein; for example the amount of the high density polyethylene can be from a lower limit of 0, 5, or 10 wt% to an upper limit of 15, 20, 25, 30, 35, 40, or 45 wt%. For example, the amount of the low density polyethylene can be from 1 to 20 wt%, or in the alternative, from 1 to 15 wt%, or in the alternative, from 5 to 15 wt%, or in the alternative from 5 to 12 wt%.

The low density polyethylene has a density of 0.916 g/cc (cm³) to 0.940 g/cc. All individual values and subranges from 0.916 to 0.940 g/cc are included herein and disclosed herein; for example, the density of the polyethylene can be from a lower limit of 0.916, 0.918, 0.920, 0.922, 0.925, 0.928, or 0.930 g/cc to an upper limit of 0.930, 0.932, 0.934, 0.936, 0.938, or 0.940 g/cc.

The melt index of the low density polyethylene in the second layer can depend on a number of factors including whether the film is a blown film or a cast film. In embodiments where the film is a blown film, the low density polyethylene has an I₂ less than or equal to 2.0 g/10 minutes. All individual values and subranges from 2.0 g/10 minutes are included herein and disclosed herein. For example, the low density polyethylene can have a density from an upper limit of 2.0, 1.7, 1.4, 1.1, or 0.9 g/10 minutes. In a particular aspect of the invention, the low density polyethylene has an I₂ with a lower limit of 0.1 g/10 minutes. All individual values and subranges from 0.1 g/10 minutes are included herein and disclosed herein. For example, the low density polyethylene can have an I₂ greater than or equal to 0.1, 0.2, 0.3, or 0.4 g/10 minutes.

Examples of low density polyethylenes that can be used in the second layer include those commercially available from The Dow Chemical Company such as LDPE 320E, and from LyondellBasell, ExxonMobil Chemical Company, and Borealis AG.

In some embodiments, the second layer can comprise other polyethylenes. The second layer, in some embodiments, comprises only the linear low density polyethylene or the combination of linear low density polyethylene and low density ethylene, as described above. The second layer, in some embodiments, does not include thermoplastic starch. In some embodiments, the second layer does not include ethylene acrylic acid. In some embodiments, the second layer comprises at least 95 percent by weight polyethylene, or in the alternative, at least 96 percent by weight polyethylene, or in the alternative, at least 97 percent by weight polyethylene, or in the alternative at least 98 percent by weight polyethylene, or in the alternative at least 99 percent by weight polyethylene.

A third layer, or core layer, is positioned between the first layer and the second layer. In some embodiments, a first surface of the third layer directly contacts the first layer, and a second, opposite surface of the third layer directly contacts the second layer.

The third layer, in some embodiments, comprises at least 10 percent by weight of a thermoplastic starch and up to 90 percent by weight of a linear low density polyethylene having a density less than 0.920 g/cc (g/cm³).

Regarding the linear low density polyethylene, the third layer comprises up to 90 percent by weight of a linear low density polyethylene in some embodiments. The third layer comprises at least 30 percent by weight of a linear low density polyethylene in some embodiments. All individual values and subranges from 30 to 90 percent by weight (wt%) are included herein and disclosed herein; for example the amount of the linear low density polyethylene can be from a lower limit of 30, 40, 50, 60, 70, or 80 wt% to an upper limit of 40, 50, 60, 70, 80, or 90 wt%. For example, the amount of the first linear low density polyethylene can be from 40 to 90 wt%, or in the alternative, from 40 to 80 wt%, or in the alternative, from 40 to 70 wt%, or in the alternative from 50 to 70 wt%. The desired overall starch content in the multilayer film can be an important factor in determining the amount of linear low density polyethylene in the third layer, as well as the relative thicknesses of the layers.

The linear low density polyethylene in the third layer can be a metallocene catalyzed linear low density polyethylene, a constrained geometry catalyst (CGC) catalyzed linear low density polyethylene, or other single site catalyzed linear low density polyethylene, or an ultra low density polyethylene (ULDPE), in some embodiments.

The linear low density polyethylene in the third layer has a density less than 0.920 g/cc (g/cm³). All individual values and subranges less than 0.920 g/cc are included herein and disclosed herein; for example, the density of the linear low density polyethylene can be up to an upper limit of 0.918, 0.915, 0.910 or 0.905 g/cc In some aspects of the invention, the linear low density polyethylene has a density greater than or equal to 0.870 g/cc. All individual values and subranges between 0.870 and 0.920 g/cc are included herein and disclosed herein.

The melt index of the linear low density polyethylene in the third layer can depend on a number of factors including whether the film is a blown film or a cast film. In embodiments where the film is a blown film, the linear low density polyethylene has an I₂ less than or equal to 2.0 g/10 minutes. All individual values and subranges from 2.0 g/10 minutes are included herein and disclosed herein. For example, the linear low density polyethylene in the third layer can have a melt index from an upper limit of 2.0, 1.7, 1.4, 1.1, or 0.9 g/10 minutes. In a particular aspect of the invention, the linear low density polyethylene has an I₂ with a lower limit of 0.1 g/10 minutes. All individual values and subranges from 0. 1 g/10 minutes are included herein and disclosed herein. For example, the linear low density polyethylene can have an I₂ greater than or equal to 0.1, 0.2, 0.3, or 0.4 g/10 minutes.

Examples of linear low density polyethylenes that can be used in the third layer include those commercially available from The Dow Chemical Company under the names ELITE™ and ATTANE™, including, for example, ELITE™ 5100, ATTANE™ 4100, and from ExxonMobil Chemical Company and Borealis AG.

In some embodiments, the third layer can comprise other polyethylenes. In some embodiments, the third layer does not include ethylene acrylic acid. The third layer, in some embodiments, comprises only the linear low density polyethylene and the thermoplastic starch.

Regarding the thermoplastic starch, the amount of thermoplastic starch in the third layer can vary depending on a number of factors including, for example, the desired overall starch content for the multilayer film, the thickness of the other layers in the film, whether other layers of the film include starch, desired physical properties of the film, and others.

In some embodiments, only the third or core layer comprises thermoplastic starch. In other embodiments, additional layers can be positioned between the first layer and the second layer, and such additional layers can comprise thermoplastic starch.

The third layer comprises at least 10 percent by weight thermoplastic starch based on the weight of the third layer, in some embodiments. The third layer comprises up to about 70 percent by weight thermoplastic starch in some embodiments. All individual values and subranges from 10 to 70 percent by weight (wt%) are included herein and disclosed herein; for example the amount of the thermoplastic starch can be from a lower limit of 10, 20, 30, 40, or 50 wt% to an upper limit of 20, 30, 40, 50, 60, or 70 wt%. For example, the amount of the thermoplastic starch can be from 10 to 60 wt% based on the weight of the third layer, or in the alternative, from 20 to 60 wt%, or in the alternative, from 20 to 50 wt%, or in the alternative from 30 to 50 wt%.

In some embodiments of the present invention, the total thermoplastic starch content of the multilayer film is at least 10 percent by weight based on the weight of the multilayer film. The total thermoplastic starch content of the multilayer film is at least 15 percent by weight in some embodiments. The total thermoplastic starch content of the multilayer film, in some embodiments, is at least 20 weight percent. In some embodiments, the total thermoplastic starch content of the multilayer film is up to 30 weight percent.

Starch is a plentiful, inexpensive and renewable material that is found in a large variety of plant sources, such as grains, tubers, fruits, and the like. Starch is readily biodegradable and it does not persist in the environment as a harmful material when disposed of. Because of the biodegradable nature of starch it has been incorporated into multi-component compositions in various forms, including as a filler, a binder, or as a constituent within thermoplastic polymer blends. As detailed above, the starch is thermoplastic starch and is used in only the third layer in some embodiments.

The starch from which the thermoplastic starch may be derived includes, but is not limited to, corn starch, potato starch, wheat starch, soy bean starch, tapioca starch, hi-amylose starch or combinations thereof. Starch comprises two types of alpha-D-glucose polymers amylose, a substantially linear polymer with a number average molecular weight of the order of 1 x 10⁵ grams per mole; and amylopectin, a highly branched polymer with a very high number average molecular weight of the order of 1 x 10⁷ grams per mole. Each repeating glucose unit has three free hydroxyl groups, thereby providing the polymer with hydrophilic properties and reactive functional groups. Most starches contain 20 to 30 wt% amylose and 70 to 80 wt% amylopectin. However, depending on the origin of the starch the ratio of amylose to amylopectin can vary significantly. For example, some corn hybrids provide starch with 100 wt% amylopectin (waxy corn starch), while other have a progressively higher amylose content ranging from 50 to 95 wt%, based on the total weight of the starch. Starch usually has a water content of up to about 15 wt%, preferably 2 to 12 wt%, based on the total weight of the starch. However, the starch can be dried to reduce its water content to below 1 wt%, based on the total weight of the starch. Starch used herein generally exists in small granules having a crystallinity ranging from about 15 to 45 wt%, based on the total weight of the starch.

Starch may be added as in a variety of different forms, such as, for example, an inert filler, generally in its native, unmodified state, which is a water-insoluble, granular material. In such cases, the starch granules will normally behave as any other solid particulate filler and will contribute little, if any, in terms of improving the mechanical properties of the resulting material. Alternatively, starch that has been gelatinized, dried, and then ground into a powder may also be added as a particulate filler. Although starch may be added as a filler, its use in the third layer is as a thermoplastically processable component in conjunction with the polyolefin and with a compatibilizer.

The thermoplastic starch phase generally comprises starch and a plasticizer that is capable of causing the starch to behave as a thermoplastic material that can form a melt when heated rather than thermally decomposing.

This "native" or "natural" form of starch may also be chemically modified for use in the third layer. Chemically modified starch includes oxidized starch, etherified starch, esterified starch, cross-linked starch, or a combination thereof. Chemically modified starch is generally prepared by reacting the hydroxyl groups of starch with one or more reagents. The degree of reaction, often referred to as the degree of substitution (DS), can significantly alter the physiochemical properties of the modified starch compared with the corresponding native starch. The DS for a native starch can range up to 3 for a fully substituted modified starch. Depending upon the type of substituent and the DS, a chemically modified starch can exhibit considerably different hydrophilic/hydrophobic character relative to native starch.

Suitable etherified starches include those which are substituted with ethyl and/or propyl groups. Suitable esterified starches include those that are substituted with actyl, propanoyl and/or butanoyl groups. Table 1 below shows several different starches and their ingredients.

**Table 1**

| Starch type | Amylose content (wt%)* | Amylopectin content (wt%) | Moisture content (wt%) | Crystallinity (wt%) |
|---|---|---|---|---|
| Wheat | 26 - 27 | 72 - 73 | 13 | 36 |
| Maize | 26 - 28 | 71 - 73 | 12 - 13 | 39 |
| Waxy Starch | <1 | 99 | N. d.** | 39 |
| Amylomaize | 50 - 80 | 20 - 50 | N. d. | 19 |
| Potato | 20 - 25 | 79 - 74 | 18 - 19 | 25 |

| | | | | |
|---|---|---|---|---|
| *All wt%'s are based on the total weight of the starch. **N.d. - not determined | | | | |

Starches having a crystallinity between 30 and 42 wt%, preferably between 35 and 40 wt%, based on the total weight of the starch are preferred. In some embodiments, the starch is a wheat starch. In some embodiments, the starch is a thermoplastic wheat starch. Maize starch (also called corn starch) may also be used. In some embodiments, the starch is a potato starch such as a thermoplastic potato starch.

Both native and chemically modified starch generally exhibit poor thermoplastic properties. To improve such properties, the starch may be converted to thermoplastic starch (TPS) by melt processing it with one or more plasticizers. Polyhydric alcohols are generally used as plasticizers in the manufacture of thermoplastic starch.

Suitable polyhydric alcohols include glycerol, ethylene glycol, propylene glycol, ethylene diglycol, propylene diglycol, ethylene triglycol, propylene triglycol, polyethylene glycol, polypropylene glycol, 1 ,2-propanediol, 1,3-propanediol, 1 ,2-butanediol, 1,3-butanediol, 1 ,4-butanediol, 1,5-pentanediol, 1 ,6-hexanediol, 1,5- hexanediol, 1 ,2,6-hexanetriol, 1,3,5-hexanetriol, neo-pentyl glycol, trimethylol propane, pentaerythritol, sorbitol, mannitol and the acetate, ethoxylate, propoxylate derivatives, or combinations thereof. In an exemplary embodiment, the plasticizer used for the thermoplastic starch is glycerol.

The plasticizer content of the thermoplastic starch is 5 wt% to 50 wt%, preferably 10 wt% to 40 wt%, and more preferably 15 wt% to about 30 wt%, based on the combined mass of the starch and the plasticizer.

Some examples of commercially available thermoplastic starches that can be used in embodiments of the present invention include Flourplast SG2 Z thermoplastic starch commercially available from Rodenburg Biopolymers B.V., and Cardia Biohybrid BL-F thermoplastic starch commercially available from Cardia Biohybrid.

As noted above, the third layer may also comprise a compatibilizer. The compatibilizer is generally a copolymer of an unsaturated carboxylic acid or a derivative of an unsaturated carboxylic acid and an olefin polymer. Examples of unsaturated carboxylic acids are maleic acid, fumaric acid, itaconic acid, methacrylic acid, crotonic acid, malonic acid, succinic acid, glutaric acid, adipic acid, pimelic acid, suberic acid, azelaic acid, sebacic acids, citraconic acid, or combinations thereof. Examples of derivatives of unsaturated carboxylic acids are maleic anhydride, citraconic anhydride, itaconic anhydride, malonic anhydride, succinic anhydride, glutaric anhydride, adipic anhydride, pimelic anhydride, suberic anhydride, azelaic anhydride, methyl acrylate, methyl methacrylate, ethyl acrylate, ethyl methacrylate, butyl acrylate, butyl methacrylate, glycidyl acrylate, glycidyl methacrylate, or the like, or a combination thereof. Maleic anhydride is the preferred grafting compound. One or more, preferably one, grafting compound is grafted onto the olefin polymer. The copolymer may be a terpolymer and may contain both an unsaturated carboxylic acid as well as a derivative of an unsaturated carboxylic in addition to the polyolefin.

The compatibilizer used in the third layer is 0.5 to 10wt%, preferably 1 to 8 wt%, and more preferably 2 to 7 wt%, based on the total weight of the third layer. In one embodiment, the weight of the compatibilizer is less than 3 wt%, preferably less than 2 wt%, based on the total weight of the third layer. In an embodiment, the weight of the compatibilizer used in the third layer is from 0.5 to 1.5 wt%, based on the total weight of the third layer.

With regard to thicknesses of the layers, the first and second layers may have a thickness of 8 to 50 micrometers, preferably 8 to 20 micrometers. The third layer (the layer comprising thermoplastic starch) may have a thickness of 15 to 80 micrometers, preferably 30 to 50 micrometers. The thickness of the third layer, in some embodiments, is at least 30% of the thickness of the multilayer film. In some embodiments, the thickness of the third layer is at least 50% of the thickness of the multilayer film. The thickness of the third layer is at least 70% of the thickness of the multilayer film in some embodiments. In some embodiments where the multilayer film comprises a three-layer film, the ratio of the first layer to the third layer to the second layer may be 1:1:1 to 1:6:1, preferably 1:2:1 to 1:6:1. The total thickness of the multilayer film, in some embodiments, may be from 25 micrometers to 200 micrometers, preferably 40 to 100 micrometers.

In an embodiment, the multilayered article may have four or more layers. For example, a fourth layer may be disposed on a surface of the first layer that is opposed to the surface that contacts the third (core) layer, while a fifth layer may be disposed on a surface of the second layer that is opposed to the surface that contacts the third (core) layer. The fourth and fifth layers (as well as other layers) may comprise any of the polyolefins listed above. In some embodiments, only the third (core) layer comprises thermoplastic starch.

The first and the second layers can adhere to the third layer without the use of intermediate or tie layers. In short, the presence of polyolefin in the first layer, the second layer and/or the third layer facilitates adhesion between the respective layers of the multilayer film. The first and second layers are in direct contact with the third layer.

In addition to the components discussed above, in some embodiments, any of the layers of the multilayer film may further comprised one or more additives from a group comprising antioxidants, ultraviolet light stabilizers, thermal stabilizers, slip agents, antiblock, pigments or colorants, processing aids, crosslinking catalysts, and fillers.

In some embodiments, multilayer films of the present invention can include relatively high amounts of starch while still exhibiting desirable physical properties.

In some embodiments, multilayer films of the present invention exhibit a normalized dart impact strength of at least 5 grams/micron, preferably 5 to 15 grams/ micron as measured in accordance with ASTM D882.

Multilayer films of the present invention exhibit Elmendorf tear values in the machine direction of at least 400 grams, preferably 400 to 1,500 grams as measured in accordance with ASTM D1922. In some embodiments, multilayer films of the present invention exhibit Elmendorf tear values in the cross direction of at least 1,000 grams, preferably 1,000 to 1,500 grams as measured in accordance with ASTM D1922.

Multilayer films of the present invention, in some embodiments, exhibit an elongation to break of at least 400%, preferably 400 to 500% as measured in accordance with ASTM 527-3.

Multilayer films of the present invention, in some embodiments, may exhibit one or more such physical properties, as well other physical properties.

Multilayer films may generally be produced using techniques known to those of skill in the art based on the teachings herein. For example, the multilayer film may be produced by coextrusion. The first layer, the second layer and/or the third layer are each extruded from separate extruders and contact each other to form the multilayer film. Extruders can be single screw extruders or multiple screw extruders (e.g., twin screw extruders). In one embodiment, the first layer, the second layer and/or the third layer are then laminated together in a roll mill to form the multilayer film. Other methods of lamination such as, for example, compression molding may also be used.

While it is noted that the first layer, the second layer and/or the third layer may be manufactured via extrusion (i.e., using a co-rotating twin screw extruder), other devices may be used for mixing the ingredients to produce the respective layers. Blending of ingredients involves the use of shear force, extensional force, compressive force, and thermal energy or combinations thereof comprising at least one of the foregoing forces and forms of energy and is conducted in processing equipment wherein the aforementioned forces are exerted by a single screw, multiple screws, intermeshing co-rotating or counter rotating screws, non-intermeshing co-rotating or counter rotating screws, reciprocating screws, screws with pins, barrels with pins, rolls, rams, helical rotors, or combinations comprising at least one of the foregoing.

Blending may be conducted in a counter-rotating intermeshing twin screw extruder, counter-rotating tangential twin screw extruder, Buss kneader, a Banbury, roll mills, Farrel continuous mixers, or the like, or combinations comprising at least one of the foregoing machines.

Embodiments of the present invention also relate to articles (e.g., packages, flexible packages, food packages, etc.) incorporating any of the multilayer films described herein.

Some embodiments of the invention will now be described in detail in the following Examples.

### Examples

### Example 1

Multilayer films incorporating a layer comprising starch are produced and evaluated. The films have an A/B/A structure. Each A layer has a nominal thickness of 12 microns, and the B layers have a nominal thickness of 36 microns, for an overall nominal film thickness of 60 microns. Table 1 provides the compositions of Inventive Film 1 and Inventive Film 2 :

**Table 1**

| | **Inventive Film 1** | **Inventive Film 2** |
|---|---|---|
| A Layer | 90% LLDPE A; 10% LDPE | 90% LLDPE A; 10% LDPE |
| ---Nom. Thickness | 12 µm | 12 µm |
| B Layer | 60% LLDPE B; 40% Thermoplastic Starch | 60% LLDPE C; 40% Thermoplastic Starch |
| ---Nom. Thickness | 36 µm | 36 µm |
| A Layer | 90% LLDPE A; 10% LDPE | 90% LLDPE A; 10% LDPE |
| ---Nom. Thickness | 12 µm | 12 µm |

LLDPE A used in the films is ELITE™ 5400G, a linear low density polyethylene having a density of 0.916 g/cm³ and melt index (I₂) of 1.0 g/10 minutes, which is commercially available from The Dow Chemical Company. The LDPE used in the films is DOW™ LDPE 320E, a low density polyethylene having a density of 0.925 g/cm³ and melt index (I₂) of 1.0 g/10 minutes, which is commercially available from The Dow Chemical Company. LLDPE B used in Inventive Film 1 is ELITE™ 5100G, a linear low density polyethylene having a density of 0.920 g/cm³ and melt index (I₂) of 0.85 g/10 minutes, which is commercially available from The Dow Chemical Company. LLDPE C used in Inventive Film 2 is ATTANE™ SL 4100G, a linear low density polyethylene having a density of 0.912 g/cm³ and melt index (I₂) of 0.85 g/10 minutes, which is commercially available from The Dow Chemical Company. The thermoplastic starch used is Flourplast SG2 Z thermoplastic starch commercially available from Rodenburg Biopolymers B.V.

The inventive films are manufactured as blown films using a Dr. Collin 5 layer blown film line. In order to achieve the desired thickness of the B layer, the same blend is used in 3 of the feeds such the film structure is A/B/BB/A. The individual feed lines are, respectively, 25/30/30/25/25 (each in mm), 25:1 L/D grooved feed lines. The blends used in the B layers are prepared using single-screw BUSS compounders, and opportunely dried before being fed to the film blowing unit. Inventive Films 1 and 2 each have nominal thermoplastic starch contents of 17 weight percent based on the total weight of the multi-layer film.

Inventive Films 1 and 2 are evaluated for dart impact strength (ASTM D882), elongation to break (ASTM 527-3), and Elmendorf tear strength (ASTM D1922). Table 2 shows the results:

**Table 2**

| | **Inventive Film 1** | **Inventive Film 2** |
|---|---|---|
| Normalized Dart Impact Strength | 6.14 g/µm | 6.90 g/µm |
| Elongation to Break (machine) | 449% | 491% |
| Elmendorf Tear (machine) | 508 g | 663 g |
| Elmendorf Tear (cross) | 1490 g | 1350 g |

As shown in Table 2, Inventive Films 1 and 2 exhibit a good balance of physical properties while having a high content of starch (∼17 weight percent).

### Example 2

Two thermoplastic potato starches are prepared for use in the inventive compositions of this example. Table 3 shows the compositions of Potato Starch 1 (PS-1) and Potato Starch 2 (PS-2), which are later referenced in Table 4:

**Table 3**

| **Ingredient/Property** | **PS-1** | **PS**-**2** |
|---|---|---|
| ELITE™ 5230G | 70 | 55 |
| AMPLIFY™ TY 1057H | 5 | 7.5 |
| Starch + Glycerol (wt. %) | 25 | 37.5 |
| | | |
| Glycerol | 6.58 | 11.25 |
| Potato Starch (45 wt. % H₂O) | 33.49 | 47.73 |
| ∼Dry Starch Content (wt. %) | 17 | 25 |

The values for the ingredients in Table 3 are expressed as relative amounts (e.g., for PS-1, if 70 pounds of ELITE™ 5230G is used, 33.49 pounds of the wet potato starch are used). ELITE™ 5230G is a linear low density polyethylene having a density of 0.916 g/cm³ and a melt index (I₂) of 4 g/10 minutes commercially available from The Dow Chemical Company. AMPLIFY™ TY 1057H is a maleic anhydride-grafted linear low density polyethylene having a density of 0.920 g/cm³ and a melt index (I₂) of 3 g/10 minutes commercially available from The Dow Chemical Company. The glycerol is a vegetable-based glycerol commercially available from US Glycerin. The potato starch is a waste potato starch provided as a damp powder (∼45% water) by McCain Foods.

These thermoplastic starch blend formulations are compounded on a twin screw extruder. All solid ingredients are fed through the main feed-throat of the extruder, and the glycerol was injected in barrel 3 of the extruder. The extruder used to produce the pellets is operated at a temperature of 140 to 210° C. The pressure in the extruder ranges from about 300 to 500 pounds per square inch. The PS-1 pellets have a dry starch content of ∼17 weight percent, and the PS-2 pellets have a dry starch content of ∼25 weight percent.

Additional multilayer films incorporating a layer comprising starch are produced and evaluated. The films have an A/B/A structure. Each A layer has a nominal thickness of 8 microns, and the B layers have a nominal thickness of 44 microns, for an overall nominal film thickness of 60 microns. Table 4 provides the compositions of Comparative Films A and B and of Inventive Films 3-5:

**Table 4**

| | **A Layer** | **B Layer** | **A Layer** |
|---|---|---|---|
| Comparative Film A | 90% LLDPE A | 100% LLDPE C | 90% LLDPE A |
| | 10% LDPE B | | 10% LDPE B |
| Comparative Film A | 90% LLDPE A | 100% LLDPE B | 90% LLDPE A |
| | 10% LDPE B | | 10% LDPE B |
| Inventive Film 3 | 90% LLDPE A | 54% PS-1 | 90% LLDPE A |
| | 10% LDPE B | 46% LLDPE C | 10% LDPE B |
| Inventive Film 4 | 90% LLDPE A | 100% PS-1 | 90% LLDPE A |
| | 10% LDPE B | | 10% LDPE B |
| Inventive Film 5 | 90% LLDPE A | 72% PS-2 | 90% LLDPE A |
| | 10% LDPE B | 28% LLDPE C | 10% LDPE B |

LLDPE A and LLDPE C are the same resins as used in Example 1. LDPE B is DOW™ LDPE 310E, a low density polyethylene having a density of 0.924 g/cm³ and melt index (I₂) of 0.75 g/10 minutes, which is commercially available from The Dow Chemical Company.

The inventive films are manufactured as blown films using a Dr. Collin 5 layer blown film line. In order to achieve the desired thickness of the B layer, the same blend is used in 3 of the feeds such the film structure is A/B/B/B/A. The individual feed lines are all 25/30/30/25/25 (each in mm), 25:1 L/D grooved feed lines. The blends used in the B layers are prepared using single-screw BUSS compounders, and opportunely dried before being fed to the film blowing unit. The Inventive Films have the following nominal thermoplastic starch contents (expressed as weight percent based on the total weight of the multi-layer film): Inventive Film 3 = 10 wt. %; Inventive Film 4 = 20 wt. %; Inventive Film 5 = 20 wt. %.

The films are evaluated for dart impact strength (ASTM D882), tensile strength (ISO 527-3), elongation to break (ISO 527-3), and Elmendorf tear strength (ASTM D1922). Table 5 shows the results:

**Table 5**

| | Dart Impact Strength (g) | Tear Strength, Cross (g) | Tear Strength, Machine (g) | Tensile Strength, Cross (MPa) | Tensile Strength, Machine (MPa) | Elongation, Cross (%) | Elongation, Machine (%) |
|---|---|---|---|---|---|---|---|
| Comparative Film A | 1,056 | 1,430 | 1,080 | 33 | 35 | 648 | 598 |
| Comparative Film B | 999 | 1,260 | 872 | 35 | 38 | 615 | 583 |
| Inventive Film 3 | 918 | 1,680 | 1,400 | 28 | 31 | 627 | 594 |
| Inventive Film 4 | 582 | 1,740 | 1,460 | 23 | 22 | 617 | 548 |
| Inventive Film 5 | 726 | 1,780 | 1,560 | 23 | 24 | 618 | 542 |

## Claims

1. A multilayer film comprising:
(a) a first layer comprising from 50 to 100 percent by weight of a linear low density polyethylene having a density less than 0.930 g/cm³ and a melt index (I₂) of 2 g/10 minutes or less;
(b) a second layer comprising from 50 to 100 percent by weight of a linear low density polyethylene having a density less than 0.930 g/cm³ and a melt index (I₂) of 2 g/10 minutes or less; and
(c) a third layer positioned between the first and second layer, wherein the third layer comprises at least 10 percent by weight of a thermoplastic starch and up to 90 percent by weight of a linear low density polyethylene having a density less than 0.920 g/cm³ and a melt index (I₂) of 2 g/10 minutes or less,
wherein the thickness of the third layer comprises at least 30% percent of the thickness of the multilayer film.

2. The multilayer film of claim 1, wherein the total thermoplastic starch content of the film is at least 15 percent by weight based on the total weight of the multilayer film.

3. The multilayer film of claim 1, wherein the total thermoplastic starch content of the film is at least 20 percent by weight based on the total weight of the multilayer film.

4. The multilayer film of any of the preceding claims, wherein the total thermoplastic starch content of the film is 30 percent by weight or less based on the total weight of the multilayer film.

5. The multilayer film of any of the preceding claims, wherein the thickness of the third layer comprises at least 50 percent of the thickness of the multilayer film.

6. The multilayer film of any of the preceding claims, wherein the first layer does not contain thermoplastic starch.

7. The multilayer film of any of the preceding claims, wherein the second layer does not contain thermoplastic starch.

8. The multilayer film of any of the preceding claims, wherein the first layer further comprises 50% by weight or less low density polyethylene.

9. The multilayer film of any of the preceding claims, wherein the second layer further comprises 50% by weight or less low density polyethylene.

10. The multilayer film of any of the preceding claims, wherein the third layer is at least twice as thick as the first layer and the second layer.

11. The multilayer film of any of the preceding claims, wherein the film exhibits a normalized dart impact strength of at least 5 grams/micron when dart impact strength is measured as per ASTM D882.

12. The multilayer film of any of the preceding claims, wherein the film exhibits a machine direction Elmendorf tear strength of at least 400 grams when measured as per ASTM D1922, and cross-machine direction Elmendorf tear strength of at least 1,000 grams when measured as per ASTM D1922.

13. The multilayer film of any of the preceding claims, wherein the film exhibits an elongation to break 400 to 500% when measured as per ASTM 527-3.

14. The multilayer film of any of the preceding claims, wherein the multilayer film does not contain ethylene acrylic acid.

15. An article comprising the multilayer film of any of the preceding claims.
